# EUROPEAN PATENT APPLICATION

(11) **EP 3 340 141 A1**
(43) Date of publication of application: **27.06.2018**
(21) Application number: 17209742.0
(22) Date of filing: 21.12.2017
(51) Int. Cl.: G06Q 20/12, G06Q 20/20, G07F 17/24

(54) **GATE CONTROL SYSTEM**

(30) Priority: 22.12.2016 JP 2016248549
(71) Applicant: Toshiba TEC Kabushiki Kaisha, Tokyo 141-8562 (JP)
(72) Inventor: ISHII, Kenichi, Shinagawa-ku,, Tokyo 141-8562 (JP)
(74) Representative: Takeuchi, Maya

(57) **Abstract**

A gate control system includes a gate opening-closing machine configured to control opening and closing of a gate, and a register machine. The register machine includes a code reader configured to read encoded information, a printer, and a control unit configured to process the encoded information read by the code reader and control the printer to print a receipt that lists merchandise containing a plurality of first encoded information read by the code reader and a code readable by a gate opening-closing machine based on second encoded information read by the code reader.

## Description

### FIELD

Embodiments described herein relate generally to a gate control system.

### BACKGROUND

In the related art, when a customer parks a car in a parking place to go shopping, accounting of merchandise and accounting of parking fee are separately performed. That is, accounting of purchased merchandise is performed at a checkout counter of a store, and accounting of parking fee was performed at a service counter of a store, or in a parking place.

For this reason, it is necessary for a shop and customers to perform accounting twice for the payment of merchandise and the parking fee when the customer parks a car in a parking place to go shopping. In addition, there is a possibility that a customer may need to wait for both of the accounting of merchandise and the accounting of parking fee.

To solve the above-cited problems, there is provided a gate control system comprising: a gate opening-closing machine configured to control opening and closing of a gate; and a register machine including a code reader configured to read encoded information, a printer, and a control unit configured to process the encoded information read by the code reader and control the printer to print a receipt that lists merchandise containing a plurality of first encoded information read by the code reader and a code readable by a gate opening-closing machine based on second encoded information read by the code reader.

Preferably, the printer prints the receipt and the code on a single sheet.

Preferably, the first encoded information includes bar codes printed on merchandise and the second encoded information includes a bar code associated with a start time.

Preferably, the control unit is configured to determine a current time and calculate a total fee based on a difference between the start time and the current time.

Preferably, the control unit is configured to calculate the total fee also based on a value of the merchandise containing the first encoded information read by the code reader.

The present invention further relates to a register system comprising: a code reader configured to read encoded information; a printer; and a control unit configured to process the encoded information read by the code reader and control the printer to print a receipt that lists merchandise containing a plurality of first encoded information read by the code reader and a code readable by a gate opening-closing machine based on second encoded information read by the code reader.

Preferably, the printer prints the receipt and the code on a single sheet.

Preferably, the first encoded information includes bar codes printed on merchandise and the second encoded information includes a bar code associated with a start time.

Preferably, the control unit is configured to determine a current time and calculate a total fee based on a difference between the start time and the current time.

Preferably, the control unit is configured to calculate the total fee also based on a value of the merchandise containing the first encoded information read by the code reader.

### DESCRIPTION OF THE DRAWINGS

FIG. 1 is a block diagram which illustrates the entire configuration of a register system of a gate control system according to an embodiment.
FIG. 2 is an external view of a POS terminal.
FIG. 3 is an external view of a parking place terminal.
FIG. 4 is a hardware block diagram which illustrates a hardware configuration of the POS terminal.
FIG. 5 is a hardware block diagram which illustrates a hardware configuration of the parking place terminal.
FIG. 6 is a functional block diagram which illustrates a functional configuration of the POS terminal.
FIG. 7 is a functional block diagram which illustrates a functional configuration of the parking place terminal.
FIGS. 8A and 8B are diagrams which illustrate examples of a receipt and an exit card which the POS terminal issues, in which FIG. 8A is a diagram which illustrates an example of a receipt, and FIG. 8B is a diagram which illustrates an example of an exit card.
FIG. 9 is a diagram which illustrates another example of a receipt which the POS terminal issues.
FIG. 10 is a flowchart which depicts a flow of processing performed by the parking place terminal at an entry time of a vehicle.
FIG. 11 is a flowchart which depicts a flow of processing performed by the POS terminal at a time of accounting.
FIG. 12 is a flowchart which depicts a flow of processing performed by the parking place terminal at an exit time of a vehicle.

### DETAILED DESCRIPTION

Embodiments provide a gate control system having a register system in which it is possible to perform accounting of purchased merchandise and parking fee at the same time.

A gate control system includes a gate opening-closing machine configured to control opening and closing of a gate, and a register machine. The register machine includes a code reader configured to read encoded information, a printer, and a control unit configured to process the encoded information read by the code reader and control the printer to print a receipt that lists merchandise containing a plurality of first encoded information read by the code reader and a code readable by a gate opening-closing machine based on second encoded information read by the code reader.

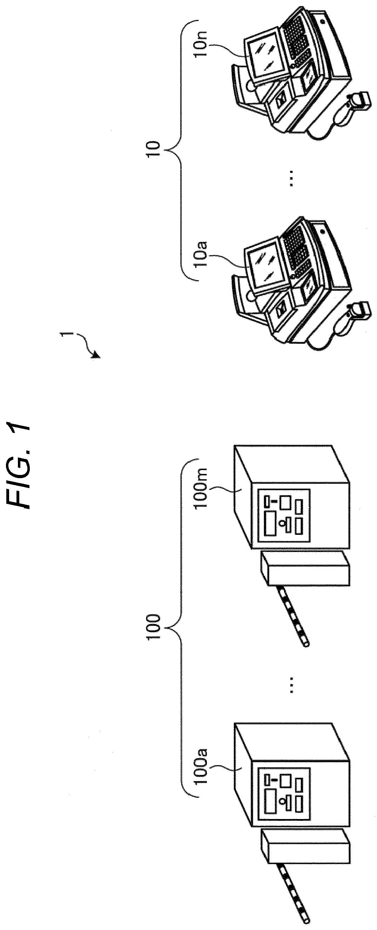

A register system 1 of a gate control system according to an embodiment will be described with reference to drawings. FIG. 1 is a block diagram which illustrates the entire configuration of the register system 1. As illustrated in FIG. 1, the register system 1 includes a point of sales (POS) terminal 10 as an example of a register device which is installed in a store, and a parking place terminal 100 which is installed in a parking place. The POS terminal 10 represents a plurality of POS terminals 10a, ..., 10n. In addition, the parking place terminal 100 represents a plurality of parking place terminals 100a ..., 100m.

The POS terminals 10a, ..., 10n perform merchandise registration processing in which information of merchandise which is subjected to purchase by a customer at a store (hereinafter, referred to as "merchandise information") is registered, and accounting processing of a merchandise price. In addition, the POS terminals 10a, ..., 10n calculate parking fee which is generated when a customer uses a parking place, and perform accounting processing of the parking fee. The POS terminals 10a, ..., 10n issue an exit card including information which denotes that parking fee is already paid, and settlement time information.

The parking place terminals 100a ..., 100m detect an entry and exit of a vehicle into and from a parking place. In addition, the parking place terminals 100a ..., 100m issue an entry card (not illustrated) on which information including an entry time is printed, when a customer drives a vehicle into a parking place. In addition, the parking place terminals 100a ..., 100m read contents of the exit card when a customer drives a vehicle out of a parking place. In addition, the parking place terminals open an exit gate under a condition that parking fee is already paid. The parking place terminals perform settlement of additional fees under a condition that parking fee that has been previously paid is insufficient. In addition, the parking place terminals 100a..., 100m perform a calculation of parking fee by reading contents of the entry card.

For ease of descriptions, hereinafter, the register system 1 will be described as a system configured of one POS terminal 10a and one parking place terminal 100a.

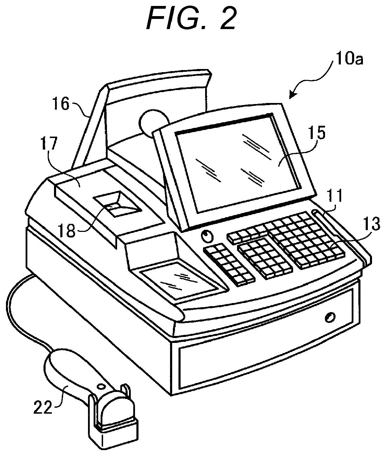

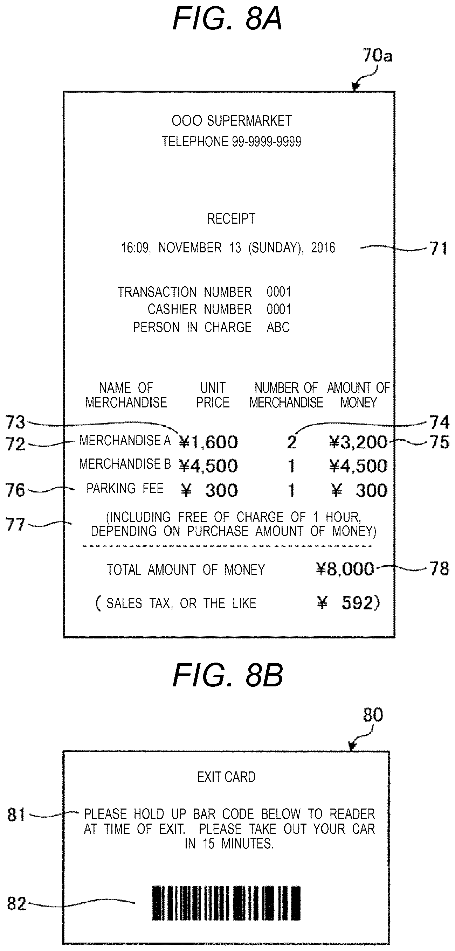

FIG. 2 is an external view of the POS terminal 10a. The POS terminal 10a includes a card reader-writer (R/W) 11, and a keyboard 13. The card R/W 11 reads contents of an entry card issued by the parking place terminal 100a when a customer drives a vehicle into a parking place. In addition, the card R/W 11 performs reading of card information, or writing of information in the card, in order to perform settlement, using a card such as a credit card or a point card. The keyboard 13 includes a ten key, a section key, a subtotal key, a deposit/current total key, a receipt issuing key, a settlement key, a tax-free declaration key, an output key to output an article name list, and the like. The POS terminal 10a is further provided with a display unit for cashier 15 and a display unit for customer 16 which are configured of a liquid crystal display, and a printer 17 which issues a receipt 70a (FIG. 8A) which will be described later, and an exit card 80 (FIG. 8B) from a receipt issuing port 18, by printing sales information on a sheet.

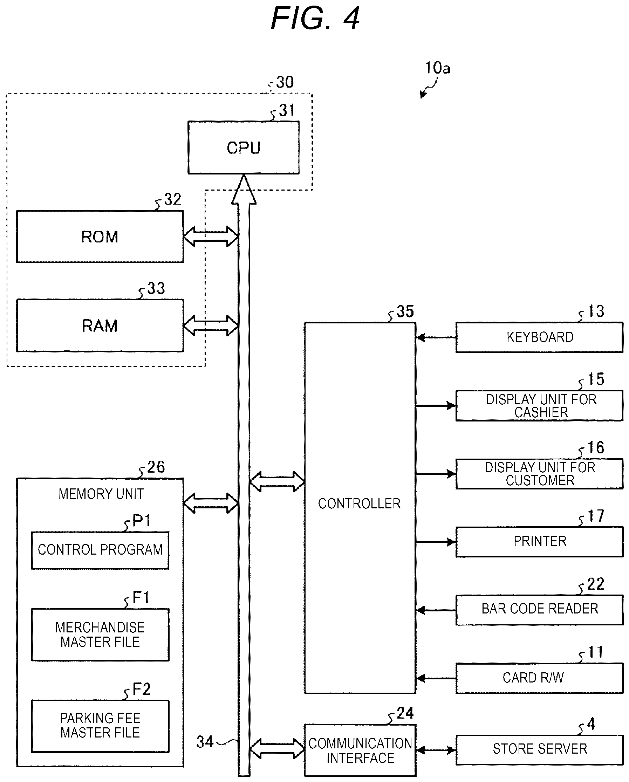

In addition, the POS terminal 10a is provided with a bar code reader 22. The bar code reader 22 reads merchandise information included in a bar code attached to merchandise which a customer purchases, and transmits the information read from a bar code to a central processing unit (CPU) 31 (FIG. 4).

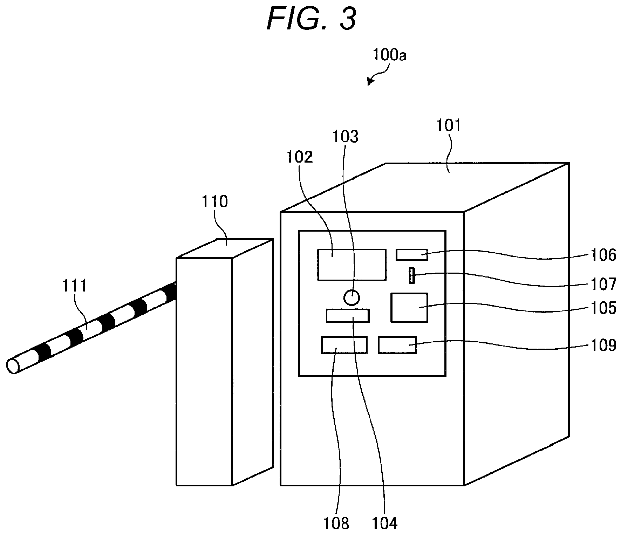

FIG. 3 is an external view of the parking place terminal 100a. The parking place terminal 100a is provided with a settlement machine 101 and a gate opening-closing machine 110. The settlement machine 101 detects an entry and exit of a vehicle into and from a parking place. In addition, the settlement machine 101 issues an entry card at a time of entry of a vehicle. The settlement machine 101 also performs a calculation of the parking fee. The settlement machine 101 includes a display unit 102, a ticketing button 103, an entry-exit card slot 104, an exit card reading unit 105, a bill inlet 106, a coin inlet 107, a bill returning slot 108, a coin returning port 109, and a vehicle detecting unit (not illustrated).

The display unit 102 is configured of a liquid crystal display, and displays information which is necessary when performing a calculation of parking fee. The ticketing button 103 is a button which is pushed when a vehicle is driven into a parking place, and instructs issuing of an entry card. The entry-exit card slot 104 is an slot of the entry card issued when a vehicle is driven in. In addition, the entry-exit card slot 104 is a slot into which an entry card or an exit card is inserted when a vehicle is driven out. The exit card reading unit 105 is a bar code reader which reads contents of an exit card which is issued by the POS terminal 10a.

The bill inlet 106 is an inlet into which a bill is inserted. The coin inlet 107 is an inlet into which a coin is inserted. The bill returning slot 108 is an outlet from which a bill is returned as change . The coin returning port 109 is an outlet from which coin is returned as change.

In addition, the vehicle detecting unit (not illustrated) is provided with an object sensor including a camera, an ultrasonic sensor, or the like, and detects approaching of a vehicle to the settlement machine 101.

In addition, the gate opening-closing machine 110 allows an entry of a vehicle. The gate opening-closing machine 110 allows an exit of a vehicle under a condition that settlement of parking fee has successfully ended. The gate opening-closing machine 110 is provided with a bar 111. The bar 111 is controlled by the gate opening-closing machine 110, and controls an entry and exit of a vehicle.

### Descriptions of hardware configuration of POS terminal

FIG. 4 is a hardware block diagram which illustrates a hardware configuration of the POS terminal 10a. As illustrated in FIG. 4, the POS terminal 10a includes a control unit 30 with a computer configuration which is configured of the CPU 31, a read only memory (ROM) 32, a random access memory (RAM) 33, and the like. The CPU 31 executes various arithmetic processing, and controls each unit. The ROM 32 stores and preserves fixed data in a fixing manner. The RAM 33 is used as a work area by storing variable data so as to be rewritable. The CPU 31, the ROM 32, and the RAM 33 are connected through a bus line 34.

In addition, the keyboard 13, the display unit for cashier 15, the display unit for customer 16, the printer 17, the card R/W 11, the bar code reader 22, and the like, which are peripheral devices, are connected to the POS terminal 10a through a controller 35. All of operations of the peripheral devices are controlled by the control unit 30.

As described above, various keys are arranged in the keyboard 13. The display unit for casher 15 displays information for a cashier when performing registration processing and accounting processing of merchandise which is subjected to purchase by a customer. The display unit for customer 16 displays information for a customer when performing registration processing and accounting processing. The printer 17 prints sales information, and issues the information as the receipt 70a (FIG. 8A) which will be described later. In addition, the printer 17 prints the exit card 80 which will be described later (FIG. 8B), and issues the card. As described above, the card R/W 11 reads contents of an entry card, reads card information such as a credit card or a point card, and writes information to the card. As described above, the bar code reader 22 reads merchandise information included in the bar code which is attached to the merchandise.

The POS terminal 10a further includes a communication interface (I/F) 24 for performing a data communication with a store server 4 as a host device through a network (not illustrated) provided in a store. Also the communication interface 24 is connected to the bus line 34.

The memory unit 26 as a storage device is connected to the control unit 30 through the bus line 34. The memory unit 26 is configured of a hard disk drive (HDD), a flash memory, or the like, and maintains stored contents even when a power supply is shut off.

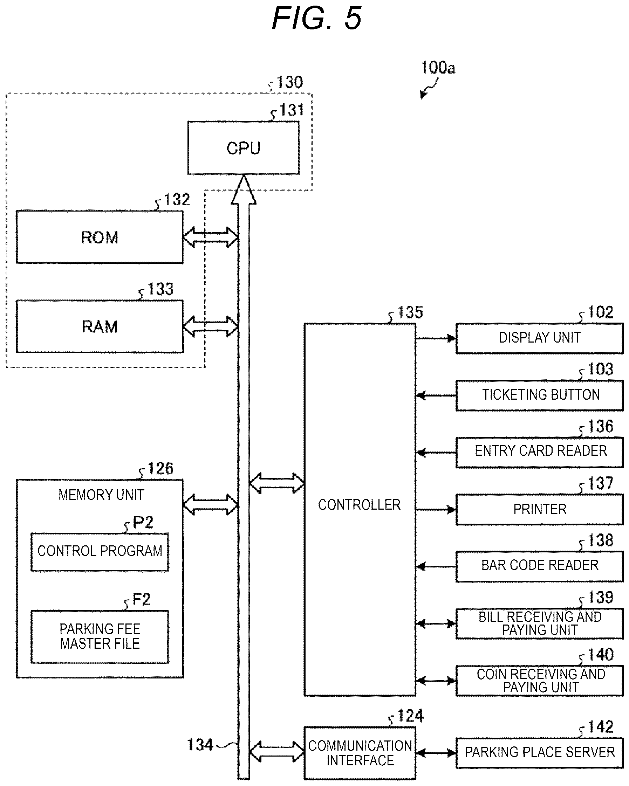

A control program P1 such as an operating system, various computer programs, and the like, and various data files are stored in the memory unit 26. As the data file, there is a merchandise master file F1 which is delivered from the store server 4, a parking fee master file F2 which is delivered from a parking place server 142 (FIG. 5) which manages the parking place terminal 100a through the store server 4, and the like. Contents of respective files will be described later.

A control program P1 which is executed by the CPU 31 of the POS terminal 10a according to the embodiment is a file with a format which can be installed, or a file with a format which can be executed, and is provided by being recorded in a computer-readable recording medium such as a CD-ROM, a flexible disk (FD), a CD-R, and a digital versatile disc (DVD).

In addition, it may be configured so that the control program P1 executed by the CPU 31 of the POS terminal 10a according to the embodiment is stored in a computer which is connected to a network such as the Internet, and is provided by being downloaded through the network. It may be configured so that the control program P1 executed in the POS terminal 10a according to the embodiment can be downloaded through a network such as the Internet.

In addition, it may be configured so that the control program P1 executed by the CPU 31 of the POS terminal 10a according to the embodiment is incorporated with the ROM 32 in advance, and is provided.

### Descriptions of hardware configuration of parking place managing device

FIG. 5 is a hardware block diagram which illustrates a hardware configuration of the parking place terminal 100a. As illustrated in FIG. 5, the parking place terminal 100a is provided with a control unit 130 with a computer configuration which is configured of a CPU 131, a ROM 132, a RAM 134, and the like. The CPU 131 controls each unit by executing various arithmetic processing. The ROM 132 stores and preserves fixed data in a fixing manner. The RAM 133 is used as a work area by storing variable data so as to be rewritable. The CPU 131, the ROM 132, and the RAM 133 are connected through a bus line 134.

In addition, a display unit 102, a ticketing button 103, an entry card reader 136, a printer 137, a bar code reader 138, a bill receiving and dispensing unit 139, a coin receiving and dispensing unit 140, and the like, which are peripheral devices, are connected to the parking place terminal 100a through a controller 135. All of operations of the peripheral devices are controlled by the control unit 130.

As described above, the display unit 102 is configured of a liquid crystal display, and displays information which is necessary when performing a calculation of parking fee. The ticketing button 103 is a button which instructs issuing of an entry card.

The entry card reader 136 reads contents of an entry card input from the entry-exit card slot 104 (FIG. 3) . The printer 137 prints information such as an entry time when issuing the entry card. The bar code reader 138 is provided in the exit card reading unit 105 (FIG. 3), and reads contents of the bar code printed on the exit card.

The bill receiving and dispensing unit 139 receives a bill inserted into the bill inlet 106. In addition, in the bill receiving and dispensing unit 139, dispensesbill(s) as change through the bill returning slot 108. The coin receiving and dispensing unit 140 receives a coin inserted into the coin inlet 107. In addition, the coin receiving and dispensing unit 140 dispenses coin (s) as change through the coin returning port 109.

The parking place terminal 100a is provided with a communication interface (I/F) 124 for performing a communication with the parking place server 142 as a host device through a network (not illustrated) provided in a parking place. Also the communication interface 124 is connected to the bus line 134.

In addition, a memory unit 126 as a storage device is connected to the control unit 130 through the bus line 134. The memory unit 126 is configured of an HDD, a flash memory, or the like, and maintains stored contents even when a power supply is shut off.

A control program P2 such as an operating system, and various computer programs, and various data files are stored in the memory unit 126. As the data file, there is a parking fee master file F2, or the like, which is delivered from the parking place server 142.

The control program P2 which is executed by the CPU 131 of the parking place terminal 100a according to the embodiment is a file with a format which can be installed, or a file with a format which can be executed, and is provided by being recorded in a computer-readable recording medium such as a CD-ROM, a flexible disk (FD), a CD-R, and a digital versatile disc (DVD).

In addition, it may be configured so that the control program P2 which is executed by the CPU 131 of the parking place terminal 100a according to the embodiment is stored in a computer connected to a network such as the Internet, and is provided by being downloaded through the network. In addition, it may be configured so that the control program P2 which is executed by the CPU 131 of the parking place terminal 100a according to the embodiment can be downloaded through a network such as the Internet.

The control program P2 which is executed by the CPU 131 of the parking place terminal 100a according to the embodiment can be provided by being incorporated with the ROM 132 in advance.

### Descriptions of functional configuration of POS terminal

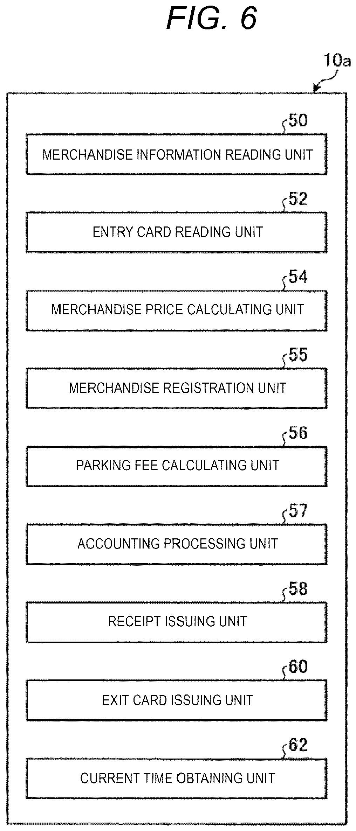

Subsequently, a functional configuration of the POS terminal 10a will be described. FIG. 6 is a functional block diagram which illustrates a functional configuration of the POS terminal 10a.

The control unit 30 of the POS terminal 10a executes a control program P1 (which is stored in the memory unit 26) in the CPU 31 to carry out the functions of the merchandise information reading unit 50, the entry card reading unit 52, the merchandise price calculating unit 54, the merchandise registration unit 55, the parking fee calculating unit 56, the accounting processing unit 57, the receipt issuing unit 58, the exit card issuing unit 60, and the current time obtaining unit 62.

The merchandise information reading unit 50 reads a bar code of merchandise which is subjected to purchase by a customer. Merchandise information including a merchandise code, which uniquely specifies the merchandise, is encoded in the bar code attached to the merchandise.

The entry card reading unit 52 reads an entry card, on which information including an entry time is printed. The entry card is issued when a vehicle is driven into a parking place.

The merchandise price calculating unit 54 calculates a price of merchandise under a condition that the merchandise information reading unit 50 reads merchandise information included in a bar code attached to the merchandise. In addition, the merchandise price calculating unit 54 calculates a price of merchandise by collating the merchandise master file F1 which is read by the CPU 31 from the memory unit 26 with the merchandise code read from the bar code.

The merchandise registration unit 55 registers merchandise information of a sales target in a sales merchandise registration table (not illustrated). Specifically, the merchandise registration unit 55 registers merchandise information which is read by the above described merchandise information reading unit 50, and the number of sales input from the keyboard 13 (FIG. 4) in the sales merchandise registration table.

The parking fee calculating unit 56 calculates parking fee based on a current time (time at which entry card reading unit 52 reads entry time) obtained by the current time obtaining unit 62, the entry time which is printed on the entry card, and a parking fee table for the parking place, if the entry card reading unit 52 reads the entry time recorded in the entry card. Specifically, the parking fee calculating unit 56 calculates a parking duration using a differential value between the current time and the entry time. In addition, the parking fee calculating unit 56 calculates parking fee by collating the calculated parking duration with the parking fee table. Here, the parking fee calculating unit 56 obtains the parking fee table by reading the parking fee master file F2 which is stored in the memory unit 26 by the CPU 31. In addition, the parking fee calculating unit 56 may discount the parking fee according to a purchase amount calculated by the merchandise price calculating unit 54.

The accounting processing unit 57 performs accounting processing of merchandise purchased by a customer. In addition, the accounting processing is processing in which a payment for merchandise, or the like, is paid in one transaction.

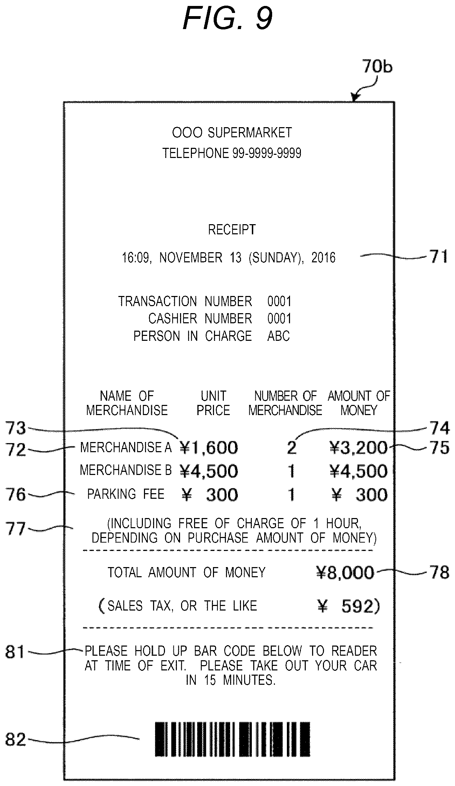

The receipt issuing unit 58 is an example of a first issuing section. The receipt issuing unit 58 creates information to be printed including a price of merchandise calculated by the merchandise price calculating unit 54, and parking fee calculated by the parking fee calculating unit 56, and prints the created information on a sheet to issue the receipt 70a (FIG. 8A). In addition, the receipt issuing unit 58 prints the receipt 70a, and a bar code 82 (FIG. 9) which denotes a time in which the entry card reading unit 52 reads an entry time recorded in the entry card, and denotes that parking fee is already paid as one receipt 70b, and issues thereof.

The exit card issuing unit 60 prints the bar code 82 on the exit card 80 information which denotes a time in which the entry card reading unit 52 reads an entry time which is printed on an entry card, and denotes that parking fee is already paid, discounted or exempted (FIG. 8B).

The current time obtaining unit 62 obtains a current time.

### Descriptions of functional configuration of parking place managing device

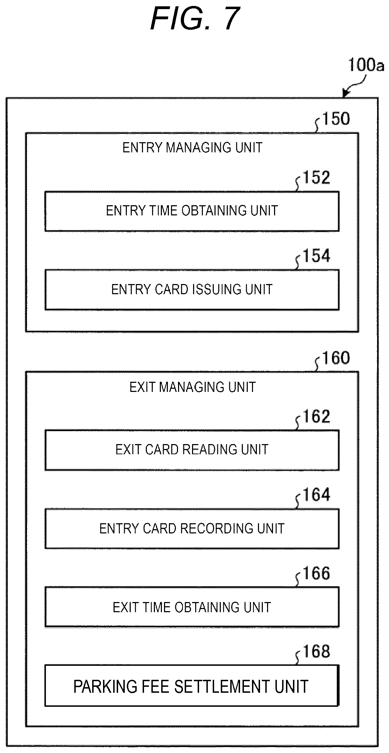

Subsequently, a functional configuration of the parking place terminal 100a will be described. FIG. 7 is a functional block diagram which illustrates a functional configuration of the parking place terminal 100a.

The control unit 130 of the parking place terminal 100a executes a control program P2 (which is stored in the memory unit 126) in the CPU 131 to carry out the functions of an entry managing unit 150 and an exit managing unit 160.

The entry managing unit 150 includes an entry time obtaining unit 152 and an entry card issuing unit 154. The entry time obtaining unit 152 obtains a time in which the ticketing button 103 (FIG. 3) is pushed. The entry card issuing unit 154 issues an entry card in which information including the entry time obtained by the entry time obtaining unit 152 is printed.

The exit managing unit 160 includes an exit card reading unit 162, an entry card reading unit 164, an exit time obtaining unit 166, and a parking fee settlement unit 168.

The exit card reading unit 162 reads contents of an exit card issued by the POS terminal 10a. Specifically, the exit card reading unit 162 reads an entry time recorded in the exit card, a time in which the entry card reading unit 52 read the entry time recorded in the entry card, and information which denotes that parking fee is already paid. The entry card reading unit 164 reads an entry time recorded in the entry card. In addition, when a customer does not purchase anything at a store, for example, the entry card reading unit 164 reads the entry card. The exit time obtaining unit 166 obtains a time at which an entry card is input to the entry-exit card slot 104 (FIG. 3), or a time at which the bar code reader 138 reads the exit card from the control unit 130 (CPU 131).

The parking fee settlement unit 168 calculates parking fee based on the current time obtained by the exit time obtaining unit 166, the entry time and a time in which the POS terminal 10a read the entry time recorded in the entry card which are recorded in the exit card, and information which denotes that parking fee is already paid, and performs a calculation. Specifically, the parking fee settlement unit 168 first determines whether settlement of parking fee is already completed in the POS terminal 10a, or the paid parking fee is insufficient. In addition, the parking fee settlement unit 168 determines that it is not necessary to perform settlement when settlement of the parking fee is completed in the POS terminal 10a. On the other hand, when the paid parking fee is insufficient, that is, when additional parking fee is required due to a passage of a predetermined time after settlement of the parking fee in the POS terminal 10a, a customer is caused to perform settlement of insufficient fee. In addition, the parking fee settlement unit 168 causes a customer who did not perform settlement of parking fee in the POS terminal 10a to perform settlement of calculated parking fee, by calculating the parking fee based on a differential value between an entry time recorded in the entry card and the current time.

### Descriptions of receipt issued by POS terminal

Subsequently, contents of the receipt 70a and the exit card 80 which are issued by the POS terminal 10a will be described, using FIGS. 8A and 8B. FIG. 8A is a diagram which illustrates an example of the receipt 70a issued by the POS terminal 10a. FIG. 8B is a diagram which illustrates an example of the exit card 80 issued by the POS terminal 10a.

An issuing date and time 71, information of purchased merchandise, that is, a merchandise name 72, a unit price 73, the number of purchased items 74, a subtotal 75, a calculated parking fee 76, discount information 77 which denotes that parking fee is discounted according to a purchasing amount of money, and a total amount of money 78 are printed on the receipt 70a.

Caution information 81 and the bar code 82 are printed on the exit card 80. The caution information 81 includes information about the time of exit and holding the bar code 82 up to the exit card reading unit 105 (FIG. 3). In the bar code 82, an entry time, a time in which the POS terminal 10a read the entry time recorded in the entry card, and information denoting that parking fee is already paid are recorded. In addition, when the exit card 80 is issued, since it is possible to drive out a vehicle from a parking place using the exit card 80, the entry card issued at a time of entry is not necessary when exiting from a parking place.

Both of the receipt 70a and the exit card 80 are printed on the printer 17 (FIG. 2) of the POS terminal 10a, and are issued from a receipt issuing port 18.

A printing format of the receipt 70a and the exit card 80 is not limited to the examples in FIGS. 8A and 8B. FIG. 9 is a diagram which illustrates another printing example of the receipt 70b which is issued by the POS terminal 10a. The receipt 70b illustrated in FIG. 9 is an example in which the receipt 70a illustrated in FIG. 8A and the exit card 80 illustrated in FIG. 8B are printed in a lump on one receipt.

As illustrated in FIG. 9, the information printed on the receipt 70b includes all information printed on the receipt 70a and the exit card 80.

### Descriptions of flow of processing performed by parking place terminal at time of entry

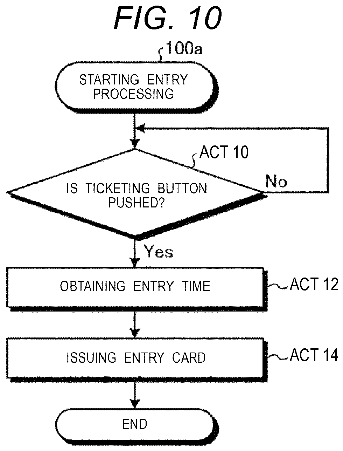

Subsequently, a flow of processing performed by the parking place terminal 100a when a vehicle is driven in will be described, using FIG. 10.

The entry managing unit 150 determines whether or not the ticketing button 103 is pushed (Act 10). When the ticketing button 103 is pushed (Yes in Act 10) , the processing proceeds to Act 12. On the other hand, when the ticketing button 103 is not pushed (No in Act 10), Act 10 is repeated.

When the ticketing button 103 is pushed in Act 10 (Yes in Act 10), the entrytime obtaining unit 152 obtains a current time from the control unit 130 (Act 12).

The entry card issuing unit 154 issues an entry card which is printed in the printer 137 (FIG. 5) (Act 14). The processing in FIG. 10 ends thereafter.

### Descriptions of flow of processing performed by POS terminal at the time of accounting.

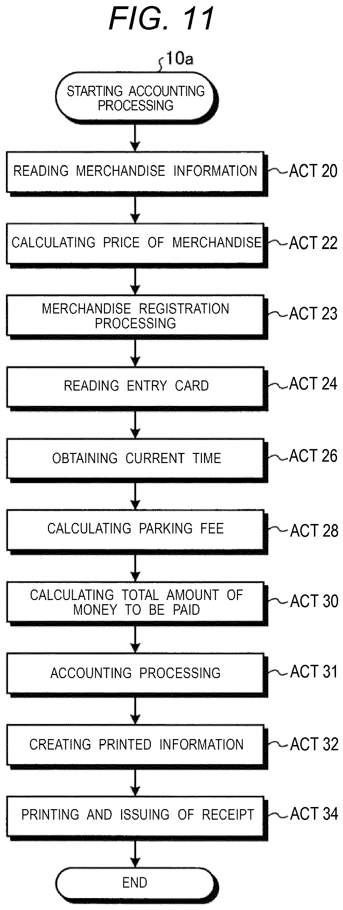

Subsequently, a flow of processing which the POS terminal 10a performs at a time of accounting will be described, using FIG. 11. In FIG. 11, the example illustrated in FIG. 9 in which the receipt 70b is printed and issued will be exemplified.

The merchandise information reading unit 50 reads a bar code including merchandise information which is given to merchandise which is subjected to purchase by a customer (Act 20).

The merchandise price calculating unit 54 calculates a price of merchandise by collating the merchandise master file F1 which is read by the control unit 30 from the memory unit 26 with a merchandise code which is read by the merchandise information reading unit 50 in Act 20 (Act 22) .

The merchandise registration unit 55 performs registration processing of merchandise (Act 23).

The entry card reading unit 52 reads an entry card in which information including an entry time is printed (Act 24) .

The current time obtaining unit 62 obtains a current time from the control unit 30 (Act 26).

The parking fee calculating unit 56 calculates parking fee based on the current time obtained by the current time obtaining unit 62 in Act 26, the entry time which is read in Act 24, and a parking fee table of a parking place (Act 28) .

The control unit 30 calculates a total amount of money to be paid by totaling up a total amount of money of a price of merchandise and parking fee (Act 30).

The accounting processing unit 57 performs accounting processing (Act 31).

The receipt issuing unit 58 generates information to be printed on the receipt 70b (Act 32).

In addition, the receipt issuing unit 58 issues the receipt 70b by printing thereof (Act 34).

As illustrated in FIGS. 8A and 8B, when the POS terminal 10a issues the receipt 70a and the exit card 80 separately, the receipt issuing unit 58 issues the receipt 70a, and the exit card issuing unit 60 issues the exit card 80.

### Descriptions of flow of processing performed by parking place terminal at a time of exit

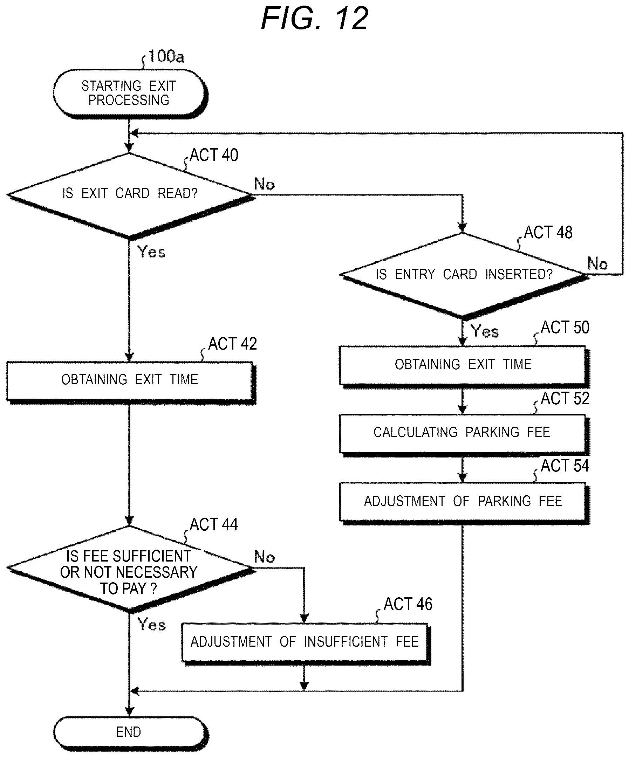

Subsequently, a flow of processing performed by the parking place terminal 100a at a time of driving out a vehicle will be described, using FIG. 12.

It is determined that whether the exit card reading unit 162 read the bar code 82 which is printed on the receipt 70b, or the bar code 82 which is printed on the exit card 80 (Act 40). When the bar code 82 is read (Yes in Act 40), the processing proceeds to Act 42.

The exit time obtaining unit 166 obtains a current time from the control unit 130 (Act 42).

The parking fee settlement unit 168 determines whether the parking fee is sufficient (Act 44). When the parking fee is sufficient (Yes in Act 44), the processing in FIG. 12 ends. Thereafter, the parking place terminal 100a opens the bar 111 (FIG. 3), and allows driving out of a vehicle.

On the other hand, when parking fee is not sufficient in Act 44 (NO in Act 44), the parking fee settlement unit 168 causes a customer to settle the insufficient parking fee (Act 46). Thereafter, the processing in FIG. 12 ends.

When the bar code 82 printed on the receipt 70b or the exit card 80 is not read in Act 40 (No in Act 40), the entry card reading unit 164 determines whether or not the entry card is inserted into the entry-exit card slot 104 (Act 48). When the entry card is inserted (Yes in Act 48), the processing proceeds to Act 50, and when the entry card is not inserted (No in Act 48), the processing returns to Act 40. The entry card is inserted when a customer did not purchase anything at a store.

On the other hand, when the entry card is inserted (Yes in Act 48), the exit time obtaining unit 166 obtains the current time as an exit time (Act 50).

Subsequently, the parking fee settlement unit 168 calculates parking fee (Act 52).

Subsequently, the parking fee settlement unit 168 calculates parking fee for a customer (Act 54). Specifically, the parking fee settlement unit 168 displays parking fee on the display unit 102 of the settlement machine 101 illustrated in FIG. 3. In addition, the parking fee calculating unit 168 instructs inputting of parking fee to the bill inlet 106 or the coin inlet 107. The parking fee settlement unit 168 counts the input bills or coins, returns a change from the bill returning slot 108 or the coin returning port 109, and completes a calculation of the parking fee. Thereafter, the processing in FIG. 12 ends.

As described above, according to the POS terminal 10a, which is an example of a register device, the merchandise information reading unit 50 of the POS terminal 10a reads a bar code of a merchandise sold at a store. In addition, the entry card reading unit 52 reads an entry card which is issued when a vehicle is driven into a parking place, and in which information including an entry time is printed. The merchandise price calculating unit 54 calculates a price of merchandise, and the parking fee calculating unit 56 calculates parking fee based on a differential value between a time in which information including an entry time is read and the entry time, and a parking fee table in a parking place. In addition, the accounting processing unit 57 performs payment processing of the price of merchandise and parking fee. Subsequently, the receipt issuing unit 58 issues the receipt 70a in which the price of merchandise calculated by the merchandise price calculating unit 54, and the parking fee calculated by the parking fee calculating unit 56 are respectively printed. In addition, the exit card issuing unit 60 issues the exit card 80 in which a time in which the entry card reading unit 52 read information including an entry time, and the bar code 82 which denotes that parking fee is already paid are printed, under a condition that the parking fee calculating unit 56 calculated parking fee. Accordingly, a customer can finish accounting of merchandise which is subjected to purchase by a customer and accounting of parking fee at a time.

According to the POS terminal 10a according to the embodiment, the receipt issuing unit 58 issues the receipt 70a and the exit card 80 as the receipt 70b of one sheet. Accordingly, it is possible to reduce a possibility that a customer may lose the exit card 80.

In addition, according to the POS terminal 10a according to the embodiment, the first encoded information and the second encoded information are bar codes. Accordingly, it is possible to read the encoded information easily and reliably, using an existing bar code reader.

According to the POS terminal 10a according to the embodiment, the parking fee calculating unit 56 calculates parking fee according to a price of merchandise. Accordingly, it is possible to simply execute a discount service of parking fee in accordance with a purchase amount of money of merchandise.

According to the merchandise sales data processing system 1 according to the embodiment, the entry managing unit 150 (entry managing section) issues an entry card in which second encoded information including an entry time is printed at a time of entry of a vehicle. In addition, the merchandise information reading unit 50 of the POS terminal 10a reads a bar code including merchandise information of the merchandise which is given to merchandise sold at a store. In addition, the entry card reading unit 52 reads an entry card which is issued when a vehicle is driven into a parking place, and in which information including an entry time is printed. In addition, the merchandise price calculating unit 54 calculates a price of merchandise, and the parking fee calculating unit 56 calculates parking fee based on a differential value between a time in which information including the entry time is read and the entry time, and a parking fee table in a parking place. In addition, the accounting processing unit 57 performs payment processing of a price of merchandise and parking fee. Subsequently, the receipt issuing unit 58 issues the receipt 70a in which the price of merchandise calculated by the merchandise price calculating unit 54, and the parking fee calculated by the parking fee calculating unit 56 are respectively printed. In addition, the exit card 80 in which a time in which the entry card reading unit 52 read information including an entry time, and the bar code 82 which denotes that parking fee is already paid are printed is issued, under a condition that the parking fee calculating unit 56 calculated parking fee. In addition, the exit managing unit 160 confirms whether the parking fee is already paid, and performs a calculation when the parking fee is insufficient, by reading the bar code 82 (third encoded information) which is printed on the exit card 80, at a time of driving out a vehicle. Accordingly, a customer can finish accounting of merchandise which is subjected to purchase by a customer and accounting of parking fee at a time.

While certain embodiments have been described, these embodiments have been presented by way of example only, and are not intended to limit the scope of the inventions . Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

For example, in the merchandise sales data processing system 1 according to the embodiment, even when a gate of a parking place which is used at a time of entry is different from a gate of the parking place which is used at a time of exit, the merchandise sales data processing system 1 functions similarly to the above descriptions. That is, even when the parking place terminal 100m which is different from the parking place terminal 100a which is used at the time of entry is used at the time of exit, it is possible to drive out a vehicle using the receipt 70b or the exit card 80 which is issued by the POS terminal 10a, and in which the bar code 82 is printed.

## Claims

1. A gate control system comprising:
a gate opening-closing machine configured to control opening and closing of a gate; and
a register machine including a code reader configured to read encoded information, a printer, and a control unit configured to process the encoded information read by the code reader and control the printer to print a receipt that lists merchandise containing a plurality of first encoded information read by the code reader and a code readable by a gate opening-closing machine based on second encoded information read by the code reader.

2. The system according to claim 1, wherein the printer prints the receipt and the code on a single sheet.

3. The system according to claim 1 or 2, wherein the first encoded information includes bar codes printed on merchandise and the second encoded information includes a bar code associated with a start time.

4. The system according to any one of claims 1 to 3, wherein the control unit is configured to determine a current time and calculate a total fee based on a difference between the start time and the current time.

5. The system according to claim 4, wherein the control unit is configured to calculate the total fee also based on a value of the merchandise containing the first encoded information read by the code reader.

6. A register machine comprising:
a code reader configured to read encoded information;
a printer; and
a control unit configured to process the encoded information read by the code reader and control the printer to print a receipt that lists merchandise containing a plurality of first encoded information read by the code reader and a code readable by a gate opening-closing machine based on second encoded information read by the code reader.

7. The system according to claim 6, wherein the printer prints the receipt and the code on a single sheet.

8. The system according to claim 6 or 7, wherein the first encoded information includes bar codes printed on merchandise and the second encoded information includes a bar code associated with a start time.

9. The system according to any one of claims 6 to 8, wherein the control unit is configured to determine a current time and calculate a total fee based on a difference between the start time and the current time.

10. The system according to claim 9, wherein the control unit is configured to calculate the total fee also based on a value of the merchandise containing the first encoded information read by the code reader.
